# EUROPEAN PATENT APPLICATION

(11) **EP 4 841 235 A1**
(43) Date of publication of application: **18.11.2026**
(21) Application number: 25835825.8
(22) Date of filing: 07.05.2025
(51) Int. Cl.: G01N 5/04

(54) **METHOD FOR MEASURING AMOUNT OF OIL ON ALUMINUM FOIL**

(30) Priority: 11.07.2024 CN 202410931085
(71) Applicant: Contemporary Amperex Technology Co., Limited, Ningde, Fujian 352100 (CN)
(72) Inventor: WANG, Xing, Ningde, Fujian 352100 (CN); HUANG, Xuejun, Ningde, Fujian 352100 (CN); ZHENG, Tuo, Ningde, Fujian 352100 (CN); LI, Shisong, Ningde, Fujian 352100 (CN); LI, Diwu, Ningde, Fujian 352100 (CN); CHU, Feng, Ningde, Fujian 352100 (CN)
(74) Representative: Straus, Alexander
(86) International application number: PCT/CN2025/093210
(87) International publication number: WO 2026/011921

(57) **Abstract**

Disclosed in the present application is a method for measuring the amount of oil on aluminum foil. Said method comprises: acquiring initial weights of a plurality of groups of aluminum foil pieces, the plurality of groups of aluminum foil pieces being obtained by cutting aluminum foil to be measured; determining a target heating mode for the plurality of groups of aluminum foil pieces on the basis of an oil amount changing relationship, and, according to the target heating mode, controlling a heating appliance to heat the plurality of groups of aluminum foil pieces, the oil amount changing relationship comprising the amounts of oil, under a plurality of heating modes, on at least one aluminum foil piece which is obtained by means of carbon coating; acquiring target weights of the plurality of groups of aluminum foil pieces after the heating; and on the basis of weight differences between the initial weights and the target weights, obtaining the amount of oil on said aluminum foil. The described solution can measure the amount of oil on the surfaces of aluminum foil.

## Description

### CROSS-REFERENCE TO RELATED APPLICATIONS

The present application claims priority to Chinese Patent Application No. 202410931085.9, filed with the China National Intellectual Property Administration on July 11, 2024 and entitled "METHOD FOR MEASURING OIL QUANTITY OF ALUMINUM FOIL", which is incorporated herein by reference in its entirety.

### TECHNICAL FIELD

The present application relates to the field of aluminum foil, and in particular, to a method for measuring an oil quantity of aluminum foil.

### BACKGROUND

With the rapid development of the domestic electronics industry and electric vehicle industry, the demand for various types of batteries has increased rapidly, and the demand for related supporting products has also increased accordingly. Aluminum foil is one of them. Aluminum foil has been widely used in recent years. It is usually directly slit into specifications for coating after rolling. A certain oil quantity (oil film) exists on the surface of the aluminum foil after finish rolling. The oil quantity will affect the electricity storage performance of a battery after a lithium battery material is coated onto the aluminum foil. When the total oil quantity on the surface of the aluminum foil is large (the oil film is thick), the coating material exhibits poor adhesion, which may render the coating thinner or uneven and impair the electricity storage capacity of the battery.

At present, the industry mainly characterizes the surface energy of aluminum foil by testing the dyne value to evaluate the carbon coating performance of aluminum foil. The higher the dyne value, the higher the surface energy of the aluminum foil and the better the carbon coating performance. The dyne value of aluminum foil is jointly affected by surface oil characteristics, treatment modes, and oil quantity. After years of development in the lithium-ion battery foil industry, with the dyne value adopted as a technical control indicator, rolling oil containing high-ester additives has been developed, aluminum foil manufactured with such rolling oil features a high dyne value and a thick oil film. This leads to the aluminum foil having high surface energy and also high oil quantity. Although the aluminum foil satisfies the technical requirements, it fails to satisfy the production requirements. Therefore, a method capable of measuring the oil quantity on the surface of aluminum foil is required.

### SUMMARY

The present application at least provides a method for measuring an oil quantity on aluminum foil, so as to measure the oil quantity on a surface of the aluminum foil.

The present application provides a method for measuring an oil quantity of aluminum foil. The method for measuring an oil quantity of aluminum foil includes: acquiring initial weights of a plurality of groups of aluminum foil pieces, where the plurality of groups of aluminum foil pieces are obtained by cutting from aluminum foil to be measured; determining a target heating mode for the plurality of groups of aluminum foil pieces based on an oil quantity variation relationship, and controlling a heating appliance to heat the plurality of groups of aluminum foil pieces according to the target heating mode, where the oil quantity variation relationship includes oil quantity of aluminum foil pieces obtained through at least one carbon coating mode under a plurality of heating modes; acquiring target weights of the plurality of groups of heated aluminum foil pieces; and obtaining the oil quantity of the aluminum foil to be measured based on a weight difference between the initial weights and the target weights.

In the above solution, a plurality of groups of aluminum foil pieces are first obtained from the aluminum foil to be measured, and the heating mode for the plurality of groups of aluminum foil pieces is determined through a pre-obtained oil quantity variation relationship, so that the weight difference of the plurality of groups of aluminum foil pieces before and after heating may be used to determine the weight of the volatilized oil, so as to determine the oil quantity of the plurality of groups of aluminum foil pieces and thus obtain the oil quantity of the aluminum foil to be measured.

In some embodiments, the method for measuring an oil quantity of aluminum foil further includes: acquiring oil quantities of aluminum foil pieces obtained through different carbon coating modes under a plurality of heating modes, where the heating modes include at least one or more of the following heating parameters: heating time, heating temperature, and placement modes of the plurality of groups of aluminum foil pieces in a heating appliance, and at least one heating parameter differs among different heating modes; and obtaining the oil quantity variation relationship based on the oil quantities of the aluminum foil pieces obtained through the respective carbon coating modes under the plurality of heating modes.

In the above solution, by acquiring the oil quantities of aluminum foil pieces obtained through different carbon coating modes under a plurality of heating modes, a suitable target heating mode may be determined according to the oil quantity variation relationship, so that the weight change between the weight after heating and the initial weight is relatively significant, thereby facilitating the calculation of the corresponding oil quantity.

In some embodiments, the carbon coating modes include missed coating and complete coating, the oil quantity variation relationship includes a first oil quantity variation of aluminum foil pieces obtained through missed coating under a plurality of heating modes and a second oil quantity variation of aluminum foil pieces obtained through complete coating under a plurality of heating modes, and determining a target heating mode for the plurality of groups of aluminum foil pieces based on an oil quantity variation relationship includes: determining a first heating mode corresponding to a maximum oil quantity in the first oil quantity variation, and determining a second heating mode corresponding to a maximum oil quantity in the second oil quantity variation; and determining the target heating mode based on the first heating mode and the second heating mode.

In the above solution, the first oil quantity variation and the second oil quantity variation are determined by using aluminum foil pieces obtained through the missed coating and complete coating modes, so as to determine the first heating mode and the second heating mode. The target heating mode is comprehensively determined with reference to the heating modes under the two carbon coating modes, so that the determined target heating mode is more accurate.

In some embodiments, the determining the target heating mode based on the first heating mode and the second heating mode includes: in response to the first heating mode being identical to the second heating mode, using the first heating mode or the second heating mode as the target heating mode; or in response to the first heating mode being different from the second heating mode, determining weights of the first heating mode and the second heating mode, and performing weighted fusion on at least one heating parameter of the first heating mode and the second heating mode according to the weights to obtain the target heating mode.

In the above solution, if the two heating modes are the same, one of them is directly determined as the target heating mode; if the two heating modes are different, a relatively appropriate target heating mode may be determined with reference to the first heating mode and the second heating mode.

In some embodiments, the heating appliance is provided with a first accommodating space, the first accommodating space is configured to place the plurality of groups of aluminum foil pieces, and the controlling the heating appliance to heat the plurality of groups of aluminum foil pieces according to the target heating mode includes: gradually heating a temperature of the first accommodating space in the heating appliance in which the plurality of groups of aluminum foil pieces are placed to a target temperature within a first preset time period; and maintaining heating at the target temperature for a second preset time period, where the first preset time period is shorter than the second preset time period.

In the above solution, by setting a relatively short temperature rise time and setting a relatively long heat preservation time, full volatilization of oil on the surface of the aluminum foil may be ensured, so that the measured oil quantity on the surface of the aluminum foil to be measured is more accurate.

In some embodiments, the heating appliance is provided with a first accommodating space, the first accommodating space is configured to place the plurality of groups of aluminum foil pieces, and the controlling a heating appliance to heat the plurality of groups of aluminum foil pieces according to the target heating mode includes: separately placing different groups of aluminum foil pieces into different second accommodating spaces of a heating support, each of the second accommodating spaces being independently arranged in the heating support, where each group of the aluminum foil pieces is obtained by division according to acquisition time; and placing the heating support in the first accommodating space of the heating appliance to heat each group of the aluminum foil pieces on the heating support.

In the above solution, by placing different groups of aluminum foil pieces in different accommodating spaces in the heating support, compared with stacking all groups of aluminum foil pieces at one position, the present solution may ensure more thorough volatilization of the oil on the surface of the aluminum foil pieces.

In some embodiments, the second accommodating space includes a through groove formed by enclosing a plurality of side walls, where the through groove is configured to place each group of the aluminum foil pieces.

In the above solution, the accommodating space is arranged as a through groove formed by enclosing a plurality of side walls, and each group of aluminum foil pieces is placed in the corresponding through groove. Compared with the accommodating space being a closed space or a semi-closed space, this solution may improve the volatilization efficiency of the oil on the surface of each aluminum foil piece.

In some embodiments, the aluminum foil to be measured is an aluminum coil formed by winding, and the method further includes: acquiring multiple layers of target aluminum foil from the aluminum foil to be measured; separately acquiring a plurality of aluminum foil pieces from a central region of each layer of the target aluminum foil; and grouping the aluminum foil pieces to obtain the plurality of groups of aluminum foil pieces.

In the above solution, multiple layers of target aluminum foil are first acquired from the aluminum coil, a plurality of aluminum foil pieces are acquired from the central region of each target aluminum foil, and then the acquired aluminum foil pieces are grouped to obtain a plurality of groups of aluminum foil pieces. This solution reduces the interference of potentially contaminated regions at the edges of each target aluminum foil on the oil quantity measurement, thereby ensuring the measurement accuracy of the oil quantity of the aluminum foil to be measured.

In some embodiments, the grouping the aluminum foil pieces to obtain the plurality of groups of aluminum foil pieces includes: for each layer of the target aluminum foil, stacking a plurality of aluminum foil pieces acquired from the target aluminum foil to obtain at least one stack of aluminum foil pieces corresponding to the target aluminum foil; respectively discarding the aluminum foil pieces on the uppermost layer and the lowermost layer of each stack among the plurality of stacks of aluminum foil pieces; and combining the plurality of stacks of aluminum foil pieces to obtain one group of aluminum foil pieces, so as to obtain the plurality of groups of aluminum foil pieces.

In the above solution, after a plurality of stacks of aluminum foil pieces are acquired, the aluminum foil pieces on the uppermost layer and the lowermost layer of each stack of aluminum foil pieces that may be contaminated are discarded before combination to form a plurality of groups of aluminum foil pieces, which may ensure the measurement accuracy of the oil quantity of the aluminum foil to be measured.

In some embodiments, the obtaining the oil quantity of the aluminum foil to be measured based on a weight difference between the initial weights and the target weights includes: acquiring a ratio of the weight difference to the initial weights; determining a first product of the ratio and a thickness of the plurality of groups of aluminum foil pieces; and using a second product obtained by multiplying the first product by a density of the aluminum foil piece as an oil quantity of the plurality of groups of aluminum foil pieces, where the oil quantity of the plurality of groups of aluminum foil pieces is used as the oil quantity of the aluminum foil to be measured.

In the above solution, by taking the thickness and density of the plurality of aluminum foil pieces into consideration, the oil quantity per unit area on the surface of the aluminum foil piece may be determined.

It should be understood that the foregoing general description and the following detailed description are merely exemplary and explanatory, and do not limit the present application.

### BRIEF DESCRIPTION OF DRAWINGS

The accompanying drawings here are incorporated into the specification and constitute a part of the specification. These drawings show embodiments conforming to the present application and, together with the specification, are used to explain the technical solution of the present application.
FIG. 1 is a schematic flowchart of a method for measuring an oil quantity of aluminum foil according to some embodiments of the present application;
FIG. 2 is a schematic diagram of an oil quantity variation relationship graph in a method for measuring an oil quantity of aluminum foil according to some embodiments of the present application;
FIG. 3 is a schematic structural diagram of a heating support in a method for measuring an oil quantity of aluminum foil according to some embodiments of the present application;
FIG. 4 is a schematic diagram of a cutting mode for a central region of a target aluminum foil in a method for measuring an oil quantity of aluminum foil according to some embodiments of the present application;
FIG. 5 is a variation component diagram in an R&R report corresponding to a method for measuring an oil quantity of aluminum foil according to some embodiments of the present application;
FIG. 6 is a diagram of oil quantity versus sample number (experimenter) in an R&R report corresponding to a method for measuring an oil quantity of aluminum foil according to some embodiments of the present application;
FIG. 7 is an R control chart in an R&R report corresponding to a method for measuring an oil quantity of aluminum foil according to some embodiments of the present application;
FIG. 8 is an Xbar control chart in an R&R report corresponding to a method for measuring an oil quantity of aluminum foil according to some embodiments of the present application;
FIG. 9 is a diagram of oil quantity versus experimenter in an R&R report corresponding to the method for measuring an oil quantity of aluminum foil according to some embodiments of the present application; and
FIG. 10 is a schematic comparison diagram of oil quantity on a surface of aluminum foil in a method for measuring an oil quantity of aluminum foil according to some embodiments of the present application.

### DESCRIPTION OF EMBODIMENTS

The solutions of the embodiments of the present application are described in detail below with reference to the accompanying drawings of the specification.

In the following description, specific details such as specific subsystem structures, interfaces, and technologies are set forth for illustrative purposes rather than limitation, so as to provide a thorough understanding of the present application.

The term "and/or" in this document is only a description of an association relationship of associated objects, indicating that three relationships may exist. For example, A and/or B may represent three cases: A exists alone, A and B exist at the same time, and B exists alone. In addition, the character "/" in this document generally indicates that the associated objects before and after are in an "or" relationship. In addition, the word "plurality" in this document means two or more than two. In addition, the term "at least one" in this document means any one of a plurality or any combination of at least two of a plurality. For example, including at least one of A, B, and C may mean including any one or more elements selected from the set consisting of A, B, and C.

An aluminum foil current collector applied in lithium-ion batteries is manufactured via a rolling process, and rolling oil is sprayed on the surface. At present, no effective measurement method is available for the oil quantity of rolling oil before delivery. When the oil quantity is excessively high, missed coating and carbon shedding defects occur on the aluminum foil during carbon coating. In a pole piece preparation process, this condition may lead to peeling of active materials from the aluminum foil or insufficient bonding force, which causes short circuit and low capacity of battery cells.

Conventional methods for measuring the oil quantity on the surface of aluminum foil mainly evaluate the oil level by observing the volatilization duration of the oil film or through odor identification. This method has certain limitations and fails to realize quantitative measurement. When the rolling oil is relatively pure or the oil quantity is low or the oil presents high transparency, accurate visual judgment cannot be realized by naked eyes. Furthermore, odor measurement of the rolling oil heavily relies on subjective human judgment and delivers poor repeatability.

To address this technical problem, the present application obtains a plurality of groups of aluminum foil pieces by selecting and cutting the aluminum foil to be measured, weighs the plurality of groups of aluminum foil pieces before and after heating. Oil volatilizes under high temperature, so the oil quantity of the plurality of groups of aluminum foil pieces is determined according to the weight difference measured before and after heating, and the oil quantity of the aluminum foil to be measured is further determined according to the oil quantity. The method of the present application may be repeatedly implemented and may realize quantitative measurement of the oil quantity on the surface of aluminum foil.

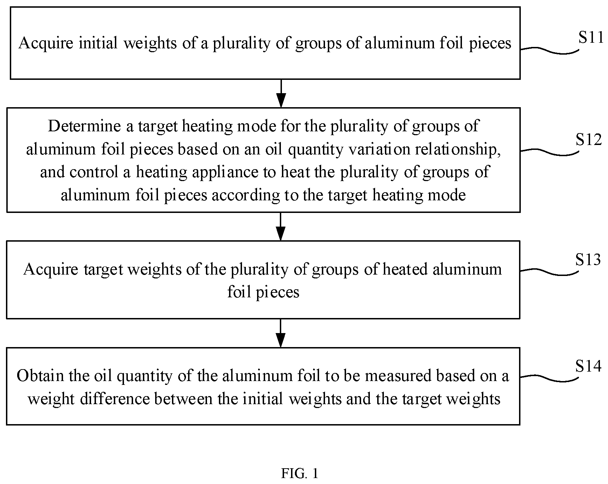

Referring to FIG. 1, the present application provides a method for measuring an oil quantity of aluminum foil, which may include the following steps S11 to S14. The method for measuring an oil quantity of aluminum foil includes: Step S11. Acquire initial weights of a plurality of groups of aluminum foil pieces, where the plurality of groups of aluminum foil pieces are obtained by cutting the aluminum foil to be measured. Step S12. Determine a target heating mode for the plurality of groups of aluminum foil pieces based on an oil quantity variation relationship, and control a heating appliance to heat the plurality of groups of aluminum foil pieces according to the target heating mode, where the oil quantity variation relationship includes oil quantity of aluminum foil pieces obtained through at least one carbon coating mode under a plurality of heating modes. Step S13. Acquire target weights of the plurality of groups of heated aluminum foil pieces. Step S14. Obtain the oil quantity of the aluminum foil to be measured based on a weight difference between the initial weights and the target weights.

The oil on the surface of the aluminum foil to be measured is generally rolling oil. Alternatively, the plurality of groups of aluminum foil pieces may be obtained by cutting from the aluminum foil to be measured via an automatic cutting system, or may be obtained through manual cutting. The automatic cutting system may be any system with a cutting function, and no specific limitation is imposed herein. The initial weights of the plurality of groups of aluminum foil pieces may be the total weight of the plurality of groups of aluminum foil pieces or the total weight of a subset of the groups of aluminum foil pieces. The plurality of groups may be one group or a plurality of groups, and each group includes a plurality of aluminum foil pieces. Since a single aluminum foil has a low weight, this solution selects a plurality of aluminum foil pieces for oil quantity measurement, which may improve the accuracy of oil quantity measurement. In some application scenarios, each group of aluminum foil pieces in the plurality of groups of aluminum foil pieces has an initial weight and a target weight, that is, each group of aluminum foil pieces determines an oil quantity according to respective initial weight, target weight, thickness, and density thereof. A maximum oil quantity corresponding to each group of aluminum foil pieces may be used as the oil quantity of the aluminum foil to be tested or an average value of all oil quantities may be used as the oil quantity of the aluminum foil to be tested. In some application scenarios, the plurality of groups of aluminum foil pieces are weighed collectively to obtain one initial weight and one target weight, so as to obtain one oil quantity, and the oil quantity is directly used as the oil quantity of the aluminum foil to be measured. A high-precision weighing instrument may be selected for weighing. For example, the plurality of groups of aluminum foil pieces may be transferred to the weighing instrument by a transmission mean such as a robotic arm or a belt. The oil quantity variation relationship includes oil quantity of aluminum foil pieces obtained through at least one carbon coating mode under a plurality of heating modes. Carbon coating modes may be classified in various manners. For example, the carbon coating modes may include missed coating and complete coating, or different carbon coating modes may be determined according to different carbon coating tools, or different carbon coating modes may be determined according to different coated carbon components. That is, different carbon coating modes may be determined by comprehensively considering different factors. The oil quantity variation relationship may be oil quantity variations of the aluminum foil pieces under a plurality of heating modes. Based on the oil quantity variation relationship, a heating mode with relatively significant oil quantity changes may be determined as the target heating mode applied to the aluminum foil piece. The heating parameters included in the heating mode may be any parameters that may affect oil quantity variations. A heating appliance may be any device capable of outputting temperature, including but not limited to a muffle furnace, a blast drying oven, a vacuum furnace, and a high-temperature oven. The internal environment of the heating appliance may be a vacuum environment or a non-vacuum environment. The placement modes for the plurality of groups of aluminum foil pieces in the heating appliance may be rolled placement, stacked placement, placement after shredding, or separated placement of each group of aluminum foil pieces by a heating support. Two alternative heating operation modes are available for heating the plurality of groups of aluminum foil pieces inside the heating appliance: the first mode is placing the plurality of groups of aluminum foil pieces in the heating appliance and then gradually rising the internal temperature of the heating appliance to the target temperature, or the second mode is preheating the heating appliance and then placing the plurality of groups of aluminum foil pieces in the heating appliance after preheating. Optionally, the target temperature is higher than the distillation point temperature of the rolling oil. That is, in this solution, a temperature greater than the distillation point temperature of the rolling oil is used to bake the plurality of groups of aluminum foil pieces, so that the residual oil on the surface of the aluminum foil volatilizes during baking, thereby lowering the weight of the plurality of groups of aluminum foil pieces. Subsequently, the oil quantity of the aluminum foil to be measured may be determined through the weight variation of the plurality of groups of aluminum foil pieces.

In the above solution, a plurality of groups of aluminum foil pieces are first obtained from the aluminum foil to be measured, and the heating mode for the plurality of groups of aluminum foil pieces is determined according to a pre-obtained oil quantity variation relationship. The weight difference of the plurality of groups of aluminum foil pieces before and after heating may be used to determine the weight of the volatilized oil, so as to determine the oil quantity of the plurality of groups of aluminum foil pieces and thus obtain the oil quantity of the aluminum foil piece to be measured.

In some embodiments, the method further includes: acquiring oil quantities of aluminum foil pieces obtained through different carbon coating modes under a plurality of heating modes, where the heating modes include at least one or more of the following heating parameters: heating time, temperature rising time, heating temperature, cooling time, and placement modes of the plurality of groups of aluminum foil pieces in the heating appliance, and at least one heating parameter differs among different heating modes; and obtaining the oil quantity variation relationship based on the oil quantities of the aluminum foil pieces obtained through the respective carbon coating modes under the plurality of heating modes.

Considering that excessive residual oil on the surface of the aluminum foil is the direct cause of missed coating and powder shedding of lithium-ion battery aluminum foil during the carbon coating, this solution collects aluminum foil with different carbon coating performances. The oil quantity variation during the heating process (baking process) is tested by adopting different sample preparation methods (methods for obtaining aluminum foil for heating), different heating temperatures, different durations for rising the internal temperature of the heating appliance from room temperature to the target temperature, different cooling durations from the target temperature to room temperature or other cooling temperature after heating, different heat preservation durations, or different placement modes of the plurality of groups of aluminum foil pieces in the heating appliance. Carbon coating modes may be classified in various manners. For example, the carbon coating modes may include missed coating and complete coating, or different carbon coating modes may be determined according to different carbon coating tools, or different carbon coating modes may be determined according to different coated carbon components. That is, different carbon coating modes may be determined by comprehensively considering different factors. For the convenience of description, the aluminum foil pieces obtained through different carbon coating modes are called sample aluminum foil pieces. A variety of preparation methods may be used to obtain aluminum foil pieces obtained through different carbon coating modes, and then the oil quantity variations of different carbon coating modes under a variety of heating parameters are tested. Then, according to the aluminum foil surface oil volatilization characteristics and oxidation characteristics extracted from each oil quantity variation, the target heating mode is determined, such as heating time, heating temperature or other heating parameters. The aluminum foil sample preparation method may also be further determined so that a plurality of groups of aluminum foil pieces may be subsequently obtained from the aluminum foil to be measured according to the target aluminum foil preparation method. Thus, the target preparation method and heating mode are determined according to the preparation method and heating parameters where the oil quantity has significant changes. For the preparation method, how many grams of aluminum foil are obtained from the aluminum foil to be measured each time, from which area of the aluminum foil to be measured the aluminum foil is obtained, and the like. For example, the oil quantity variation relationship may be obtained in the following way: fixing the heating temperature as heating temperature A, and testing the oil quantity variations corresponding to different heating times or different temperature rise times or different cooling times or different placement modes of the plurality of groups of aluminum foil pieces in the heating appliance or different aluminum foil sample preparation methods; or fixing the heating time as heating time B, test the oil quantity variations corresponding to different heating temperatures or different cooling times or different placement modes of the plurality of groups of aluminum foil pieces in the heating appliance or different target aluminum foil preparation methods, where only one parameter or a small number of parameters are changed in each test to facilitate observation. Thus, the oil quantity variation relationship may record the oil quantity variations corresponding to various test parameters, so that optimal heating parameters and preparation methods may be determined.

The oil quantity may be the ratio between the weight difference of the sample aluminum foil piece before and after heating and the initial weight of the sample aluminum foil piece before heating, or the oil quantity may only represent the weight difference of the sample aluminum foil piece before and after heating. This embodiment takes the oil quantity per unit area carried by the aluminum foil as an example. The oil quantity variation relationship records the oil quantities of aluminum foil pieces obtained according to different carbon coating modes under different heating modes. The oil quantity variation relationship may be in the form of an oil quantity variation curve or a bar chart. According to the oil quantity variation relationship, a general heating mode applicable to aluminum foil obtained by various carbon coating modes may be determined as the target heating mode. For example, the heating modes corresponding to the maximum oil quantity or a significantly high oil quantity among the multiple oil quantities obtained from the aluminum foil pieces under different carbon coating modes and a plurality of heating modes are fused to obtain the target heating mode. Optionally, according to the oil quantity variation relationship, the specific mode of obtaining the plurality of groups of aluminum foil pieces from the aluminum foil to be measured may also be determined, such as how many grams are obtained each time as a group, how many groups are obtained in total, and from which position of the aluminum foil to be measured each group is obtained. In some application scenarios, the heating appliance is a muffle furnace. The plurality of groups of aluminum foil pieces may be placed in the muffle furnace, and the muffle furnace is set to rise from room temperature to 300°C (temperature rise time ≤35 min), and timing baking is performed for 1 h after the temperature rises to 300°C. After baking for 1 h, when the furnace temperature cools to about 150°C, the plurality of groups of aluminum foil pieces are taken out and the target weight is obtained after the plurality of groups of aluminum foil pieces are cooled to room temperature.

In the above solution, by acquiring the oil quantities of aluminum foil pieces obtained through different carbon coating modes under different heating modes, a suitable target heating mode may be determined according to the oil quantity variation relationship, so that the weight change between the weight after heating and the initial weight is relatively significant, thereby facilitating the calculation of the corresponding oil quantity.

In some embodiments, the carbon coating modes include missed coating and complete coating, and the oil quantity variation relationship includes a first oil quantity variation of aluminum foil pieces obtained through missed coating under a plurality of heating modes and a second oil quantity variation of aluminum foil pieces obtained through complete coating under a plurality of heating modes. The above mode of determining a target heating mode for the plurality of groups of aluminum foil pieces based on an oil quantity variation relationship may be: determining a first heating mode corresponding to the maximum oil quantity in the first oil quantity variation, and determining a second heating mode corresponding to the maximum oil quantity in the second oil quantity variation. The target heating mode is determined based on the first heating mode and the second heating mode.

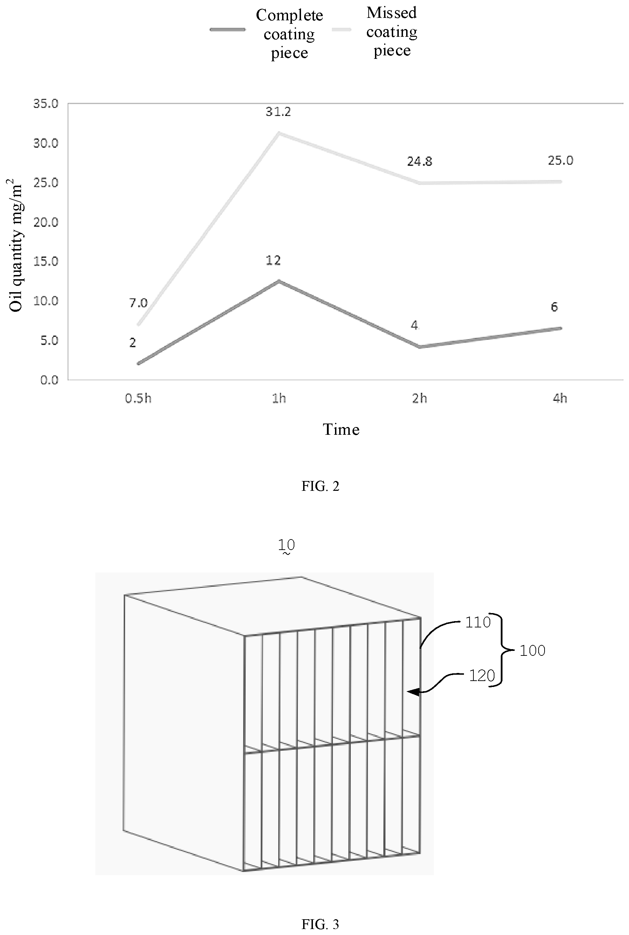

Missed coating may be understood as an area where carbon missed coating exists on the surface of the aluminum foil, and complete coating may be understood as an area where carbon coating is not missing or is not measured to be missing on the surface of the aluminum foil. The first oil quantity variation and the second oil quantity variation are aluminum foil pieces under two different carbon coating modes obtained by the same sample preparation method. The two aluminum foil pieces are heated under different heating modes respectively, and the oil quantity of the two aluminum foil pieces under different heating modes may be obtained. For example, the two aluminum foil pieces are successively placed in a heating appliance at 300°C and heated for 0.5 h, 1 h, 2 h, and 4 h to obtain two oil quantity variations. For details, refer to FIG. 2, the aluminum foil obtained by missed coating has the maximum oil quantity when the heating time is 1 h, and the aluminum foil without missed coating also has the maximum oil quantity when the heating time is 1 h. The heating for 1 h may be directly used as the heating duration in the target heating mode. However, it is not excluded that under other carbon coating modes or other sample preparation methods, the two oil quantity variations will obtain the maximum oil quantity under the same heating mode. Therefore, the target heating mode may be determined by means of heating mode fusion. In the present application, the heating duration is used as an example of the independent variable. The oil quantity variations obtained with different independent variables are also different. The final heating temperature, sample preparation method, heating tool, or the like may be determined according to the oil quantity variations obtained in various situations.

In the above solution, the first oil quantity variation and the second oil quantity variation are determined by using aluminum foil obtained in two modes of missed coating and complete coating, so as to determine the first heating mode and the second heating mode, and then the target heating mode is comprehensively considered by referring to the heating modes under the two carbon coating modes, so that the determined target heating mode is more accurate.

In some embodiments, the above mode of determining the target heating mode based on the first heating mode and the second heating mode may be: in response to the first heating mode being identical to the second heating mode, using the first heating mode or the second heating mode as the target heating mode; or in response to the first heating mode being different from the second heating mode, determining weights of the first heating mode and the second heating mode, and performing weighted fusion on at least one heating parameter of the first heating mode and the second heating mode according to the weights to obtain the target heating mode.

The first heating mode and the second heating mode are the same, indicating that the aluminum foil pieces obtained through different carbon coating modes under this identical heating mode may all have a high oil quantity, so this heating mode may be directly used as the target heating mode. If the two obtained heating modes are different, the two heating modes may be weighted and fused to obtain the target heating mode. In some application scenarios, if the weight of one of the heating modes is 0 and the weight of the other heating mode is 1, the heating mode with a weight of 1 is directly used as the target heating mode. In some application scenarios, if the weights of the two heating modes are both intermediate values between 0 and 1, at least some parameters in the two heating modes are multiplied by their respective weights and then added to obtain the target heating mode. Optionally, the weight value may be adaptively set. For example, the weight may be set according to the ratio of the oil quantities obtained through the first heating mode and the second heating mode. For example, if only the heating time is different in the first heating mode and the second heating mode, the first heating mode is heating for 1 h and the oil quantity is 30 mg/m², while the second heating mode is heating for 1.5 h and the oil quantity is 15 mg/m², then the weight of the first heating mode is 30/45, and the weight of the second heating mode is 15/45, then the final heating duration is 1.17 h. Of course, this is only an example. In other application scenarios, if the difference between the oil quantities corresponding to the two heating modes is greater than or equal to a preset difference, the weight of the heating mode corresponding to the larger oil quantity is directly set to 1, meaning that the heating mode is directly used as the target heating mode. If at least two heating parameters differ between the first heating mode and the second heating mode, the weights of the different heating parameters may be identical or different, and the weight of each heating parameter may be preset or may be determined according to a ratio of corresponding oil quantities.

In the above solution, if the two heating modes are the same, one of them is directly determined as the target heating mode; if the two heating modes are different, a relatively appropriate target heating mode may be determined with reference to the first heating mode and the second heating mode.

In some embodiments, the heating appliance is provided with a first accommodating space, the first accommodating space is configured to place the plurality of groups of aluminum foil pieces, and the mode of controlling the heating appliance to heat the plurality of groups of aluminum foil pieces according to the target heating mode may be: gradually heating a temperature of the first accommodating space in the heating appliance in which the plurality of groups of aluminum foil pieces are placed to a target temperature within a first preset time period; and maintaining heating at the target temperature for a second preset time period, where the first preset time period is shorter than the second preset time period.

The first accommodating space may be a sealable accommodating space. For example, after the plurality of groups of aluminum foil pieces are placed in the first accommodating space, the first accommodating space may be closed and may be opened again after heating is completed. Gradually heating to the target temperature may be uniform heating to the target temperature within the first preset time period or non-linear heating to the target temperature. The placement mode for the plurality of groups of aluminum foil pieces in the heating appliance may be flat placement, roll placement, or isolation and placement of each group of aluminum foil pieces by a heating support. Maintaining heating at the target temperature for a second preset time period may be understood as maintaining the temperature in the heating appliance at the target temperature and maintaining the time as the second preset time period.

In the above solution, by setting a relatively short temperature rise time and setting a relatively long heat preservation time, full volatilization of oil on the surface of the aluminum foil may be ensured, so that the measured oil quantity on the surface of the aluminum foil to be measured is more accurate.

In some embodiments, the heating appliance is provided with a first accommodating space, the first accommodating space is configured to place the plurality of groups of aluminum foil pieces, and the mode of controlling the heating appliance to heat the plurality of groups of aluminum foil pieces according to the target heating mode may be: separately placing different groups of aluminum foil pieces into different second accommodating spaces of a heating support. Each of the second accommodating spaces is independently arranged in the heating support, and each group of the aluminum foil pieces is obtained by division according to acquisition time. The heating support is placed in the first accommodating space of the heating appliance to heat each group of the aluminum foil pieces on the heating support.

For example, the mode of grouping the aluminum foil pieces obtained from the aluminum foil to be measured may be to use the obtained aluminum foil pieces as one group. After the weight of one group of aluminum foil pieces reaches a preset weight, the next group of aluminum foil pieces is obtained, or after all the aluminum foil pieces are obtained, they are combined according to the order of acquisition. The weight difference between different groups of aluminum foil pieces is small. For example, in this embodiment, the weight of each group of aluminum foil pieces is selected to be in the range of 30 g to 40 g. The function of the heating support is to separate each group of aluminum foil pieces. If all groups of aluminum foil pieces are stacked in one place, the oil on the surface of the aluminum foil pieces in the middle part may not be easily volatilized. By isolating each group of aluminum foil pieces through the heating support, the oil on the surface of each group of aluminum foil pieces may be better volatilized.

In the above solution, by placing different groups of aluminum foil pieces in different accommodating spaces in the heating support, compared with stacking all groups of aluminum foil pieces at one position, the present solution may ensure more thorough volatilization of the oil on the surface of the aluminum foil pieces.

In some embodiments, the second accommodating space includes a through groove formed by enclosing a plurality of side walls, where the through groove is configured to place each group of the aluminum foil pieces.

The side walls may be perforated side walls or non-perforated side walls. In some application scenarios, a plurality of through holes may be provided on the side walls, and two ends of each through hole communicate with two adjacent accommodating spaces respectively. In other application scenarios, no through holes are provided on the side walls. By setting the through groove and placing each group of aluminum foil pieces in the corresponding through groove, it is convenient for the oil on the surface of the aluminum foil to volatilize. The specific structure of the heating support may refer to FIG. 3. The heating support 10 may have a two-layer or multi-layer structure. Each layer may include a plurality of accommodating spaces 100, and each accommodating space includes a through groove 120 formed by enclosing a plurality of side walls 110. The dimension of the heating support 10 may be set according to the dimension of the heating appliance, that is, the dimension of the heating support 10 is generally smaller than the dimension of the internal accommodating space of the heating appliance, which is convenient for placing the heating support 10 in the heating appliance.

In the above solution, the accommodating space is arranged as a through groove formed by enclosing a plurality of side walls, and each group of aluminum foil pieces is placed in the corresponding through groove respectively, compared with the accommodating space being a closed space or a semi-closed space, the volatilization efficiency of the oil on the surface of each aluminum foil piece may be improved.

In some embodiments, the aluminum foil to be measured is an aluminum coil formed by winding, and the method further includes: acquiring multiple layers of target aluminum foil from the aluminum foil to be measured; separately acquiring a plurality of aluminum foil pieces from a central region of each layer of the target aluminum foil; and grouping the aluminum foil pieces to obtain the plurality of groups of aluminum foil pieces.

The aluminum foil obtained by general processing is stored in the form of an aluminum coil, so multiple layers of target aluminum foil may be cut from the aluminum coil and a plurality of groups of aluminum foil pieces may be cut from each layer of target aluminum foil. The central region may be understood as a region at a certain distance from the boundary of each target aluminum foil. In some application scenarios, the distance between the central region and the boundary of the target aluminum foil may be less than the length or width of a single aluminum foil piece, or in other application scenarios, the distance between the central region and the boundary of the target aluminum foil may be greater than or equal to the length or width of a single aluminum foil piece. Specifically, the cutting process may be understood as a sampling process. In other words, the boundary of each target aluminum foil is not sampled. The modes of obtaining the target aluminum foil from the aluminum foil to be measured and obtaining each aluminum foil piece from the target aluminum foil may be performed by an automatic cutting system or manually, which is not specifically limited here. For example, the automatic cutting system is provided with a cutting blade. The target aluminum foils are stacked so that the cutting blade may cut from the top target aluminum foil to the bottom target aluminum foil at one time, and the cutting speed is fast. Alternatively, after the automatic cutting system finishes cutting a single target aluminum foil, the cut target aluminum foil is removed from the cutting area of the automatic cutting system, and the next target aluminum foil is moved to the cutting area to use the cutting blade to cut its central region. The manual cutting mode may also cut the next sheet after cutting one sheet, or the control knife may directly extend in the direction perpendicular to the stacking direction of each target aluminum foil to cut the stacked target aluminum foils at one time.

In the above solution, multiple layers of target aluminum foil are first acquired from the aluminum coil, a plurality of aluminum foil pieces are acquired from the central region of each target aluminum foil, and then the acquired aluminum foil pieces are grouped to obtain a plurality of groups of aluminum foil pieces, which reduces the interference of possibly contaminated areas at the edges of each target aluminum foil on the oil quantity measurement, thereby ensuring the measurement accuracy of the oil quantity of the aluminum foil to be measured.

In some embodiments, the above mode of grouping the aluminum foil pieces to obtain the plurality of groups of aluminum foil pieces includes: for each layer of the target aluminum foil, stacking the plurality of aluminum foil pieces acquired from the target aluminum foil to obtain at least one stack of aluminum foil pieces corresponding to the target aluminum foil; respectively discarding the aluminum foil pieces on the uppermost layer and the lowermost layer of each stack among the plurality of stacks of aluminum foil pieces; and combining the plurality of stacks of aluminum foil pieces to obtain one group of aluminum foil pieces, so as to obtain the plurality of groups of aluminum foil pieces.

In some application scenarios, after a single target aluminum foil is obtained from the aluminum coil, the obtained single target aluminum foil is rolled tightly to obtain multiple sub-aluminum coils. Alternatively, all the obtained target aluminum foils may be rolled together to obtain one sub-aluminum coil. In some application scenarios, after a single target aluminum foil is obtained by cutting, the cut single target aluminum foil is rolled tightly to obtain multiple sub-aluminum coils. After all the target aluminum foils are cut from the aluminum coil, one of the sub-aluminum coils is unrolled and cut to obtain a stack of aluminum foil pieces, and then the next sub-aluminum coil is unrolled and cut to obtain a stack of aluminum foil pieces, and so on until a stack of aluminum foil pieces corresponding to all sub-aluminum coils is obtained. All aluminum foil pieces in a stack of aluminum foil pieces are cut from the same target aluminum foil. In some application scenarios, all the obtained target aluminum foils are rolled tightly to form one sub-aluminum coil, and then the sub-aluminum coil is successively flattened and cut to obtain a plurality of stacks of aluminum foil pieces, where each aluminum foil piece in each stack of aluminum foil pieces is cut from different aluminum foils.

The oil on the surface of the aluminum foil piece in the lowermost layer of each stack of aluminum foil pieces may be rubbed off or pick up other substances, affecting the initial weight. The oil on the surface of the aluminum foil piece in the uppermost layer may volatilize or pick up other substances, which may affect the initial weight. Therefore, in order to guarantee the accuracy of oil quantity measurement, the aluminum foil pieces on the uppermost layer and the lowermost layer of each stack are discarded, and then at least some of the stacks of aluminum foil pieces are combined together to obtain one group of aluminum foil pieces, thereby obtaining a plurality of groups of aluminum foil pieces. For example, the weight of each group of aluminum foil pieces may be used as the preparation method to determine according to the maximum oil quantity when determining the oil quantity variation relationship.

In the above solution, after acquiring a plurality of stacks of aluminum foil pieces, the aluminum foil pieces on the uppermost layer and the lowermost layer of each stack of aluminum foil pieces that may be contaminated are discarded and then combined into a plurality of groups of aluminum foil pieces, which may ensure the measurement accuracy of the oil quantity of the aluminum foil to be measured.

In some embodiments, the plurality of aluminum foil pieces obtained by cutting are stacked to obtain a stack of aluminum foil pieces; in response to all the target aluminum foils having been cut, the aluminum foil pieces on the uppermost layer and the lowermost layer of the stacking positions in each group of aluminum foil pieces are discarded to obtain the plurality of groups of aluminum foil pieces.

In the above solution, after a stack of aluminum foil pieces is obtained by cutting, they are stacked and placed, and after all the target aluminum foils are cut, the aluminum foil pieces on the uppermost layer and the lowermost layer of each stack of aluminum foil pieces that may be contaminated are discarded, which may ensure the measurement accuracy of the oil quantity of the aluminum foil to be measured.

In some embodiments, the obtaining the oil quantity of the aluminum foil to be measured based on a weight difference between the initial weights and the target weights includes: acquiring a ratio of the weight difference to the initial weights; determining a first product of the ratio and a thickness of the plurality of groups of aluminum foil pieces; and using a second product obtained by multiplying the first product by a density of the aluminum foil piece as an oil quantity of the plurality of groups of aluminum foil pieces, where the oil quantity of the plurality of groups of aluminum foil pieces is used as the oil quantity of the aluminum foil to be measured.

Optionally, each group of aluminum foil pieces in the plurality of groups of aluminum foil pieces has an initial weight and a target weight, that is, each group of aluminum foil pieces determines an oil quantity according to its own initial weight, target weight, thickness, and density, and the maximum oil quantity corresponding to each group of aluminum foil pieces may be used as the oil quantity of the aluminum foil to be tested. Alternatively, the plurality of groups of aluminum foil pieces are weighed collectively to obtain one initial weight and one target weight, so as to obtain one oil quantity, and the oil quantity is directly used as the oil quantity of the aluminum foil to be measured.

Specifically, the mode of calculating the oil quantity on aluminum foil may refer to formula (1): $Oil quantity \left(mg/{m}^{2}\right) = \frac{{m}_{before} - {m}_{after}}{{m}_{before}} \times {h}_{thick} \times 2.7 g / {m}^{3} \times 1000$ Formula (1); where *m_{before}* represents the initial weight, *m_{after}* represents the target weight after heating, *h_{thick}* represents the thickness of the plurality of groups of aluminum foil pieces, and 2.7*g*/*m*³ × 1000 represents the density of the aluminum foil.

In the above solution, by considering the thickness and density of the plurality of aluminum foil pieces, the oil quantity per unit area on the surface of the aluminum foil piece may be determined.

In some application scenarios, the aluminum foil to be measured is an aluminum coil. Multiple layers of target aluminum foil may be obtained first, and then each target aluminum foil is cut to obtain a plurality of groups of aluminum foil pieces. The specific mode of obtaining multiple layers of target aluminum foil may be: cut two narrow strips from the edge of the aluminum coil, tear the narrow strip aluminum foil along the width direction to the other side of the aluminum coil, remove the multiple layers of aluminum foil torn from the aluminum coil, about 20 layers to 30 layers of aluminum foil, that is, 20 layers to 30 layers of target aluminum foil may be obtained. The obtained multiple layers of target aluminum foil are removed from the aluminum coil and rolled tightly. In some embodiments, batch information may also be set for each target aluminum foil to facilitate subsequent recording of oil quantity measurement results.

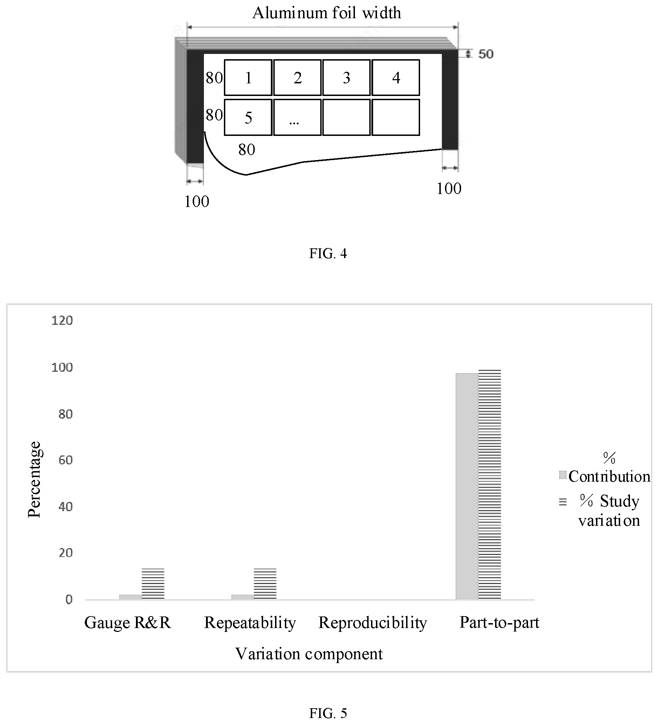

Then, the following steps are performed on the rolled aluminum foil to obtain a plurality of groups of aluminum foil pieces: 1. Lay the aluminum foil rolled sample flat and draw notches with a spacing of about 80 mm in the width direction. 2. Tear off about 80 mm × 80 mm aluminum foil. The tearing mode may be manual tearing or cutting with a knife at the end of a robotic arm. 3. Repeat steps 1 and 2 to take multiple stacks of aluminum foil transversely and sample in the order of 1-2-3-4-... as shown in FIG. 4. 4. After removing the upper and lower layers of each stack, stack them together, and control the total weight of one group to 30 g to 40 g. 5. Repeat steps 1 to 4 to take three groups or multiple groups from each roll of aluminum foil. For example, the mode of cutting each layer of target aluminum foil may refer to FIG. 4. The central region of the target aluminum foil is cut to obtain a plurality of aluminum foil pieces. The central region refers to a region at a certain distance from the boundary of the target aluminum foil. For example, in FIG. 4, the distance from the boundary in the width direction may be 100 mm, and the distance from the boundary in the length direction may be 50 mm. Of course, the specific value of this distance from the boundary is only an example. In other embodiments, it may be other values. For example, the distance from the boundary in the width direction may be 80 mm to 120 mm, and the distance from the boundary in the length direction may be 30 mm to 70 mm. The division of the central region is not specifically limited herein.

After obtaining a plurality of groups of aluminum foil pieces, before weighing the aluminum foil pieces, an auxiliary fixture may be placed on a high-precision weighing disc to zero the electronic balance. Then, the plurality of groups of aluminum foil pieces are placed on the auxiliary fixture. The protective cover is closed during weighing to ensure weighing accuracy, and the aluminum foil weight before baking *m_{before}* is recorded, where *m_{before}* is recorded in gram weight and retains 4 decimal places.

After weighing is completed, the plurality of groups of aluminum foil pieces are successively placed into the heating support. Each grid of the heating support is an accommodating space, where each grid places one group of aluminum foil pieces. Then the heating support is placed into the muffle furnace, and the muffle furnace is set to rise from room temperature to 300°C (temperature rise time ≤35 min). Timing baking is performed for 1 h after the temperature rises to 300°C. After baking for 1 h, when the furnace temperature cools to about 150°C, the heating support is taken out with high-temperature gloves and sampling tongs. The taken-out plurality of groups of aluminum foil pieces are cooled to room temperature and then weighed. Specifically, the aluminum foil samples are taken out from the heating support with tools such as tweezers, the electronic scale is zeroed before measurement, and then the plurality of groups of aluminum foil pieces are placed into the tray. The protective cover is closed during weighing and the aluminum foil weight after baking *m_{after}* is recorded, retaining 4 decimal places. Then the oil quantity of each group is obtained according to the above formula (1), and the maximum oil quantity may be selected as the oil quantity of the aluminum foil to be tested. The results obtained through different carbon coating modes include carbon coating powder shedding aluminum foil with an oil quantity >12 mg/m², and normal aluminum foil ≤12 mg/m², which fully meets the aluminum foil incoming material measurement requirements. Meanwhile, the dyne value mode cannot distinguish normal aluminum foil from aluminum foil featuring carbon coating powder shedding and missed coating.

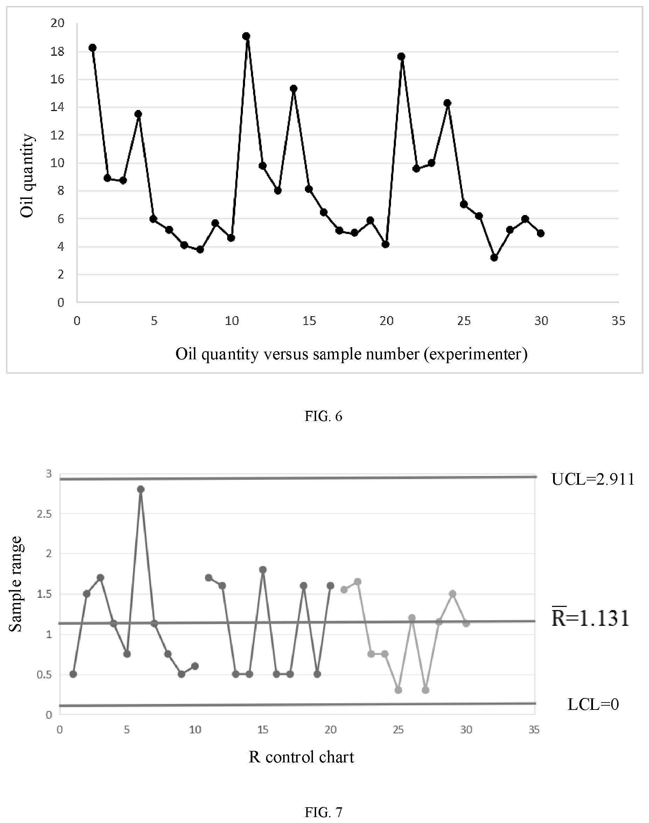

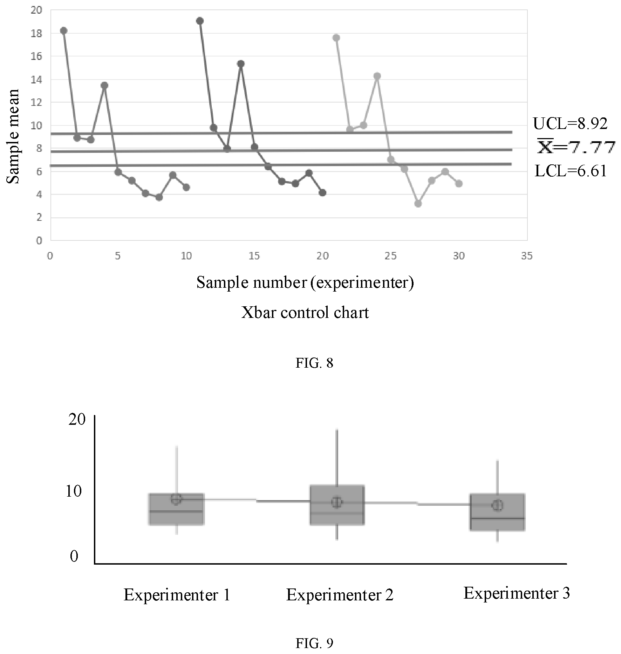

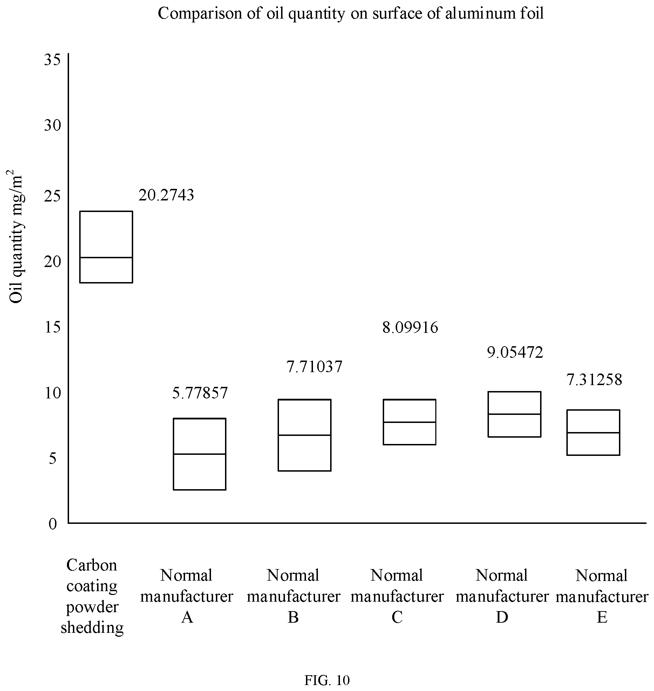

Detailed test results may refer to the gauge R&R (nested) report for the oil quantity shown in FIG. 5 to FIG. 9. As shown in FIG. 5, FIG. 5 is a variation component diagram, which demonstrates that the variation induced by different gauges is minor, whereas part-to-part variation is significant. FIG. 6 is a scatter plot of oil quantity versus sample number (experimenter). The sample number is a number of a tested aluminum foil. As shown in FIG. 6, measurement results of oil quantity on different aluminum foils obtained by different operators exhibit small discrepancies. Specifically, horizontal axis values 1 to 10 represent the test results of experimenter 1 for sample numbers 1 to 10, horizontal axis values 11 to 20 represent test results of experimenter 2 for sample numbers 1 to 10, and horizontal axis values 21 to 30 represent test results of experimenter 3 for sample numbers 1 to 10. FIG. 7 is an R control chart (by experimenter), with UCL=2.911, *R̅*=1.131, LCL=0. FIG. 8 is an Xbar control chart (by experimenter), with UCL=8.92, *X̅*=7.77, LCL=6.61. FIG. 9 is a plot of an oil quantity versus experimenter diagram. FIG. 10 displays oil quantity test results for aluminum foil with carbon coating powder shedding and normal aluminum foil manufactured by manufacturers A to E. Obviously, the oil quantity on aluminum foil with carbon coating powder shedding is markedly higher than that on normal aluminum foil.

When testing the method for measuring an oil quantity of aluminum foil provided in this embodiment, different test modes are adopted for verification, such as different operators performing the method and performing oil quantity measurement on aluminum foil manufactured by different manufacturers to measure the repeatability and reproducibility of the method for measuring an oil quantity of aluminum foil, so as to determine that the method for measuring an oil quantity of aluminum foil provided in this embodiment has repeatability and reproducibility.

## Claims

1. A method for measuring an oil quantity of aluminum foil, **characterized by** comprising:
acquiring initial weights of a plurality of groups of aluminum foil pieces, wherein the plurality of groups of aluminum foil pieces are obtained by cutting from aluminum foil to be measured;
determining a target heating mode for the plurality of groups of aluminum foil pieces based on an oil quantity variation relationship, and controlling a heating appliance to heat the plurality of groups of aluminum foil pieces according to the target heating mode, wherein the oil quantity variation relationship comprises oil quantity of aluminum foil pieces obtained through at least one carbon coating mode under a plurality of heating modes;
acquiring target weights of the plurality of groups of heated aluminum foil pieces; and
obtaining the oil quantity of the aluminum foil to be measured based on a weight difference between the initial weights and the target weights.

2. The method according to claim 1, **characterized in that** the method for measuring an oil quantity of aluminum foil further comprises:
acquiring oil quantities of aluminum foil pieces obtained through different carbon coating modes under a plurality of heating modes, wherein the heating modes comprise at least one or more of the following heating parameters: heating time, temperature rising time, heating temperature, cooling time, and placement modes of the plurality of groups of aluminum foil pieces in the heating appliance, and at least one heating parameter differs among different heating modes; and
obtaining the oil quantity variation relationship based on the oil quantities of the aluminum foil pieces obtained through the respective carbon coating modes under the plurality of heating modes.

3. The method according to claim 2, **characterized in that** the carbon coating modes comprise missed coating and complete coating, the oil quantity variation relationship comprises a first oil quantity variation of aluminum foil pieces obtained through missed coating under a plurality of heating modes and a second oil quantity variation of aluminum foil pieces obtained through complete coating under a plurality of heating modes, and the determining a target heating mode for the plurality of groups of aluminum foil pieces based on an oil quantity variation relationship comprises:
determining a first heating mode corresponding to a maximum oil quantity in the first oil quantity variation, and determining a second heating mode corresponding to a maximum oil quantity in the second oil quantity variation; and
determining the target heating mode based on the first heating mode and the second heating mode.

4. The method according to claim 3, **characterized in that** the determining the target heating mode based on the first heating mode and the second heating mode comprises:
in response to the first heating mode being identical to the second heating mode, using the first heating mode or the second heating mode as the target heating mode; or
in response to the first heating mode being different from the second heating mode, determining weights of the first heating mode and the second heating mode, and performing weighted fusion on at least one heating parameter of the first heating mode and the second heating mode according to the weights to obtain the target heating mode.

5. The method according to claim 4, **characterized in that** the method further comprises:
determining the weights of the first heating mode and the second heating mode according to a ratio of oil quantities obtained through the first heating mode and the second heating mode; or
in response to a difference between oil quantities obtained through the first heating mode and the second heating mode being greater than or equal to a preset difference, setting a weight of a heating mode corresponding to a larger oil quantity to 1, wherein the heating mode with a weight of 1 serves as the target heating mode; or
in response to at least two heating parameters of the first heating mode and the second heating mode being different, determining a weight of each heating parameter respectively, wherein the weight of each heating parameter is preset or determined according to a ratio of the oil quantities obtained through the first heating mode and the second heating mode.

6. The method according to any one of claims 1 to 5, **characterized in that** the heating appliance is provided with a first accommodating space, the first accommodating space is configured to place the plurality of groups of aluminum foil pieces, and the controlling a heating appliance to heat the plurality of groups of aluminum foil pieces according to the target heating mode comprises:
gradually heating a temperature of the first accommodating space in the heating appliance in which the plurality of groups of aluminum foil pieces are placed to a target temperature within a first preset time period; and
maintaining heating at the target temperature for a second preset time period, wherein the first preset time period is shorter than the second preset time period.

7. The method according to any one of claims 1 to 6, **characterized in that** the heating appliance is provided with a first accommodating space, the accommodating space is configured to place the plurality of groups of aluminum foil pieces, and the controlling a heating appliance to heat the plurality of groups of aluminum foil pieces according to the target heating mode comprises:
separately placing different groups of aluminum foil pieces into different second accommodating spaces of a heating support, wherein each of the second accommodating spaces is independently arranged in the heating support, and each group of the aluminum foil pieces is obtained by division according to acquisition time; and
placing the heating support in the first accommodating space of the heating appliance to heat each group of the aluminum foil pieces on the heating support.

8. The method according to claim 7, **characterized in that** the second accommodating space comprises a through groove formed by enclosing a plurality of side walls, the through groove being configured to place each group of the aluminum foil pieces.

9. The method according to any one of claims 1 to 8, **characterized in that** the aluminum foil to be measured is an aluminum coil formed by winding, and the method further comprises:
acquiring multiple layers of target aluminum foil from the aluminum foil to be measured;
separately acquiring a plurality of aluminum foil pieces from a central region of each layer of the target aluminum foil; and
grouping the aluminum foil pieces to obtain the plurality of groups of aluminum foil pieces.

10. The method according to claim 9, **characterized in that** the grouping the aluminum foil pieces to obtain the plurality of groups of aluminum foil pieces comprises:
for each layer of the target aluminum foil, stacking a plurality of aluminum foil pieces acquired from the target aluminum foil to obtain at least one stack of aluminum foil pieces corresponding to the target aluminum foil;
respectively discarding the aluminum foil pieces on the uppermost layer and the lowermost layer of each stack among the plurality of stacks of aluminum foil pieces; and
combining the plurality of stacks of aluminum foil pieces to obtain one group of aluminum foil pieces, so as to obtain the plurality of groups of aluminum foil pieces.

11. The method according to claim 9, **characterized in that** the method further comprises:
determining a mode for acquiring the plurality of groups of aluminum foil pieces from the aluminum foil to be measured according to the oil quantity variation relationship.

12. The method according to any one of claims 1 to 11, **characterized in that** the obtaining the oil quantity of the aluminum foil to be measured based on a weight difference between the initial weights and the target weights comprises:
acquiring a ratio of the weight difference to the initial weights;
determining a first product of the ratio and a thickness of the plurality of groups of aluminum foil pieces; and
using a second product obtained by multiplying the first product by a density of the aluminum foil piece as an oil quantity of the plurality of groups of aluminum foil pieces, wherein the oil quantity of the plurality of groups of aluminum foil pieces is used as the oil quantity of the aluminum foil to be measured.
